# EUROPEAN PATENT SPECIFICATION

(11) **EP 4 594 675 B1**
(45) Date of publication and mention of the grant of the patent: **15.07.2026**
(21) Application number: 23805224.5
(22) Date of filing: 28.09.2023
(51) Int. Cl.: F17C 6/00

(54) **METHOD FOR FILLING LIQUID CRYOGEN TRAILERS**
VERFAHREN ZUM BEFÜLLEN VON KRYOGENEN FLÜSSIGKEITSANHÄNGERN
PROCÉDÉ DE REMPLISSAGE DE REMORQUES DE CRYOGÈNE LIQUIDE

(30) Priority: 29.09.2022 US 202217956623
(43) Date of publication of application: 06.08.2025
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: LIGHT, Joshua, Houston, TX 77024 (US)
(74) Representative: Air Liquide
(86) International application number: PCT/US2023/034023
(87) International publication number: WO 2024/072991

(56) References cited:
- WO-A1-2021/144095
- FR-A3- 3 077 866
- US-A- 5 699 839
- US-A1- 2019 041 004

## Description

### Field of the Invention

The present invention relates to an optimized method of distribution of liquid cryogen between a liquefied cryogen depot and end users.

### Background of the Invention

Liquid cryogen, such as hydrogen, is produced and stored by a number of means, but generally the liquid hydrogen is stored in a cryogenic storage tank on or near the source of hydrogen liquefaction (i.e., the liquefier) and often also the original hydrogen source, such as an electrolyzer. Liquid Hydrogen is transferred from this cryogenic storage container to cryogenic tube trailers transported by semi-trucks to sites remote from the liquefier, such as a hydrogen filling station for fuel cell electric vehicles (FCEVs).

At the remote site, the liquid hydrogen is transferred, by pressure difference, from the tube trailer through a hose to the end user storage tank by pressure difference. Because the pressure within the tube trailer is limited by regulatory authorities for purposes of safety, the initial pressure in the tube trailer at the remote site is typically much less than the pressure of the end user tank. For this reason, pressure must be built up in the tube trailer, according to conventional techniques, to a level sufficient to drive the liquid hydrogen from the tube trailer into the end user tank. The transfer of liquid hydrogen then proceeds until the pressures within the tube trailer and the end user tank are more or less equalized.

Because a substantial amount of the final cost of liquid hydrogen is made up of transportation costs, between the liquefier and the remote sites, it would be desirable to reduce those transportation costs. One way of doing so is to use so-called jumbo trailers whose liquid hydrogen storage capacity substantially exceeds that of tube trailers. While the use of jumbo trailers may be advantageous, regulatory authorities may restrict their use in more densely populated areas for safety reasons.

Regardless of whether a tube trailer or jumbo trailer is used, if enough liquid hydrogen remains within the trailer after an initial fill, subsequent fills of other end user tanks at other remote sites may be performed. Once the tube trailer or jumbo trailer is sufficiently depleted of liquid hydrogen, it is returned to the liquefier so that it may be filled again for continued deliveries to remote sites.

Before a refill, and depending upon the cost of hydrogen vs the cost for compressing hydrogen, gaseous hydrogen within the trailer may vented to a location within the liquefaction process, typically until the pressure within the trailer reaches 2-4 psig (13.8-27.6 kPa). G. Petipas, "Boil-off losses along LH2 pathway", Lawrence Livermore National Laboratory, LLNL-TR-750685, May 2, 2018. Depending upon the relative costs of cooling, compression, and hydrogen product, the hydrogen may instead be vented to the ambient. This is because the hydrogen remaining in the trailer upon return to the liquefier may be relatively warm and/or relatively low pressure, and thus make it difficult to take thermodynamic advantage of the pressure and/or cold energy of the remaining hydrogen when introducing it into the liquefaction process.

Given the above, it would be advantageous to provide an improved method for distribution of liquid hydrogen to one or more end user sites that lowers the cost of transporting it and avoids wastage.

US2019/041004A1 discloses a method according to preamble of claim 1.

### Summary of the Invention

There is disclosed a method of distributing liquid cryogen to one or more end user sites. It includes the following steps. First, second, and third liquid cryogen-containing trailers are provided. Storage capacities of the first and third trailers are substantially the same and smaller than that of the second trailer. Each of the trailers has a headspace filled with cryogen vapor above the liquid cryogen contained therein. Each of the trailers is located at a depot at which the first trailer is at an initial pressure higher than an initial pressure of the second trailer which is higher than an initial pressure of the third trailer. Headspaces of the first and second trailers are placed in flow communication, thereby pressure-balancing the first and second trailers to a pressure P1 that is in between the initial pressures of the first and second trailers and that is higher than the initial pressure of the third trailer. Following the pressure-balancing of the first and second trailers, the liquid cryogen contained within the second trailer is placed in flow communication with the liquid cryogen contained within the third trailer, thereby causing liquid cryogen to flow from the second trailer to the third trailer due to the pressure difference between the pressure P1 of the first and second trailers and the initial pressure of the third trailer. The flow of liquid cryogen between the second and third trailers is allowed to continue until the third trailer is substantially filled with liquid cryogen and the first and second trailers are each at a pressure P2.

The method may include one or more of the following aspects:
- prior to the step of providing first, second, and third liquid cryogen-containing trailers, the first trailer is transported to an end user site A at which liquid cryogen is transferred from the first trailer to a storage tank at end user site A; and following the transfer of liquid cryogen to the end user site A, the first trailer is transported to the depot at which are located the second and third trailers, wherein, at the depot, the first trailer is at an initial pressure higher than an initial pressure of the second trailer which is higher than an initial pressure of the third trailer.
- after the step of allowing said flow of liquid cryogen between the second and third trailers to continue until the third trailer is substantially filled, the third trailer is transported to an end user site B at which liquid cryogen is transferred from the third trailer to a storage tank at end user site B which is the same or different from end user site A.
- after the step of allowing the flow of liquid cryogen between the second and third trailers to continue until the third trailer is substantially filled, gaseous cryogen is vented from the first trailer, thereby lowering a pressure of the first trailer down to a predetermined pressure lower than P2; a fourth liquid cryogen-containing trailer is provided having a storage capacity substantially the same as the first and third trailers, the fourth trailer being located at the depot at an initial pressure and having a headspace filled with cryogen vapor above the liquid cryogen contained therein, the initial pressure of the fourth trailer being higher than P2 which is higher than the predetermined pressure of the first trailer; headspaces of the fourth and second trailers are placed in flow communication, thereby pressure-balancing the fourth and second trailers to an intermediate pressure in between P2 and the initial pressure of the fourth trailer, the intermediate pressure of the fourth and second trailers being higher than the predetermined pressure of the first trailer; following the pressure-balancing of the fourth and second trailers, the liquid cryogen contained within the second trailer is placed in flow communication with the liquid cryogen contained within the first trailer, thereby causing liquid cryogen to flow from the second trailer to the third trailer due to the pressure difference between the intermediate pressure of the first and second trailers and the predetermined pressure of the first trailer; and the flow of liquid cryogen between the second and first trailers is allowed to continue until the first trailer is substantially filled with liquid cryogen.
- the first trailer is transported to an end user site C at which liquid cryogen is transferred from the first trailer to a storage tank at end user site C, end user site C being the same or different than end user site A and the same or different than end user site B, wherein the second and fourth trailers are the same or different trailers.
- after the step of allowing said flow of liquid cryogen between the second and third trailers to continue until the third trailer is substantially filled, gaseous cryogen is vented from the first trailer, thereby lowering a pressure of the first trailer down to a predetermined pressure lower than P2; a fourth liquid cryogen-containing trailer is provided having a storage capacity substantially the same as the first and third trailers, the fourth trailer being located at the depot at an initial pressure and having a headspace filled with cryogen vapor above the liquid cryogen contained therein, the initial pressure of the fourth trailer being higher than P2 which is higher than the predetermined pressure of the first trailer: headspaces of the fourth and second trailers are placed in flow communication, thereby pressure-balancing the fourth and second trailers to an intermediate pressure in between P2 and the initial pressure of the fourth trailer, the intermediate pressure of the fourth and second trailers being higher than the predetermined pressure of the first trailer: following the pressure-balancing of the fourth and second trailers, the liquid cryogen contained within the second trailer is placed in flow communication with the liquid cryogen contained within the first trailer, thereby causing liquid cryogen to flow from the second trailer to the third trailer due to the pressure difference between the intermediate pressure of the first and second trailers and the predetermined pressure of the first trailer; and the flow of liquid cryogen between the second and first trailers is allowed to continue until the first trailer is substantially filled with liquid cryogen.
- the first trailer is transported to an end user site C at which liquid cryogen is transferred from the first trailer to a storage tank at end user site C, end user site C being the same or different than end user site A and the same or different than end user site B, wherein the second and fourth trailers are the same or different trailers.
- after the step of allowing said flow of liquid cryogen between the second and third trailers to continue until the third trailer is substantially filled, gaseous cryogen is vented from the first trailer, thereby lowering a pressure of the first trailer down to a predetermined pressure lower than P2; a fourth liquid cryogen-containing trailer is provided having a storage capacity substantially the same as the first and third trailers, the fourth trailer being located at the depot at an initial pressure and having a headspace filled with cryogen vapor above the liquid cryogen contained therein, the initial pressure of the fourth trailer being higher than P2 which is higher than the predetermined pressure of the first trailer; Headspaces of the fourth and second trailers are placed in flow communication, thereby pressure-balancing the fourth and second trailers to an intermediate pressure in between P2 and the initial pressure of the fourth trailer, the intermediate pressure of the fourth and second trailers being higher than the predetermined pressure of the first trailer: following the pressure-balancing of the fourth and second trailers, the liquid cryogen contained within the second trailer is placed in flow communication with the liquid cryogen contained within the first trailer, thereby causing liquid cryogen to flow from the second trailer to the third trailer due to the pressure difference between the intermediate pressure of the first and second trailers and the predetermined pressure of the first trailer; and the flow of liquid cryogen between the second and first trailers is allowed to continue until the first trailer is substantially filled with liquid cryogen.
the first trailer is transported to an end user site C at which liquid cryogen is transferred from the first trailer to a storage tank at end user site C, end user site C being the same or different than end user site A and the same or different than end user site B, wherein the second and fourth trailers are the same or different trailers.
- after the step of allowing said flow of liquid cryogen between the second and third trailers to continue until the third trailer is substantially filled, the third trailer is transported to an end user site B at which liquid cryogen is transferred from the first trailer to a storage tank at end user site B which is the same or different from end user site A.
- the cryogen is Hydrogen.

### Brief Description of the Drawings

For a further understanding of the nature and objects of the present invention, reference should be made to the following detailed description, taken in conjunction with the accompanying drawings, in which like elements are given the same or analogous reference numbers and wherein:
**FIG 1** is a schematic illustration of an initial state of a combination of three trailers, including a higher-pressure returned trailer, a jumbo trailer, and a lower-pressure trailer to be filled.
**FIG 2** is a schematic illustration of a step of pressure-balancing between the returned trailer and the jumbo trailer of **FIG 1****.**
**FIG 3** is a schematic illustration of a step of transfer of liquid hydrogen from the jumbo trailer to the lower-pressure trailer of **FIG 2****.**
**FIG 4** is a schematic illustration of the continuation of the liquid hydrogen transfer step of **FIG 3****.**
**FIG 5** is a schematic illustration of a conclusion of the liquid hydrogen transfer step of **FIG 4****.**
**FIG 6** is a schematic illustration of step of venting the returned trailers to lower its pressure.
**FIG 7** is a schematic illustration of how the vented returned trailer becomes the lower-pressure to be filled.
**FIG 8** is a schematic illustration of an initial state of a combination of a returned trailer and jumbo trailer of **FIG 5** and the now-lower-pressure returned trailer to be filled of **FIG 7****.**
**FIG 9** is a schematic illustration of a step of pressure-balancing between the returned trailer and jumbo trailer of **FIG. 8****.**
**FIG 10** is a schematic illustration of a step of transfer of liquid hydrogen from the jumbo trailer to the lower-pressure trailer of **FIG 9****.**
**FIG 11** is a schematic illustration of the continuation of the liquid hydrogen transfer step of **FIG 10****.**
**FIG 12** is a schematic illustration of a conclusion of the liquid hydrogen transfer step of **FIG 11****.**

### Description of Preferred Embodiments

The inventor has conceived of an optimized method for distributing liquid cryogen (such as nitrogen, argon, helium, or hydrogen) to one or more end user sites. The method utilizes at least three, often four (or even more), liquid cryogen-containing trailers and which includes steps performed at a liquid cryogen depot and steps performed at one or more end user sites.

One of the trailers, a so-called jumbo trailer, has a substantially larger storage capacity and is located at the depot. The other trailers are filled with liquid cryogen from the jumbo trailer at the depot and are transported to an end user site after being filled so that they can, in turn, fill a storage tank located at an end user site. The type of cryogen is not limited and includes Oxygen, Nitrogen, Argon, Helium, Krypton, Neon, and preferably Hydrogen.

After one of the other trailers is substantially depleted of liquid cryogen and cannot be used to fill an end user storage tank, it is returned to the depot. Because of heat leaks incurred between transport of one of the other trailers between the end user site and the depot and/or the necessity of boosting pressure within that trailer to effectuate a fill of the end user storage tank, an interior of the trailer returned to the depot may be at a relatively higher pressure. By pressure-balancing the returned trailer and the jumbo trailer, the relatively high pressure of the returned trailer is used to boost a pressure of the jumbo trailer. Subsequently, the pressure within the returned trailer and the pressure within the jumbo trailer is used to drive liquid cryogen from the jumbo trailer to another trailer, at a relatively lower pressure, to be filled.

In this manner, much of the pressurized gaseous cryogen remaining in a trailer after delivery of liquid cryogen to an end user site may be used during the fill of another trailer with liquid cryogen from the jumbo trailer. As a consequence, less cryogen is wasted.

A more detailed explanation of the method now follows.

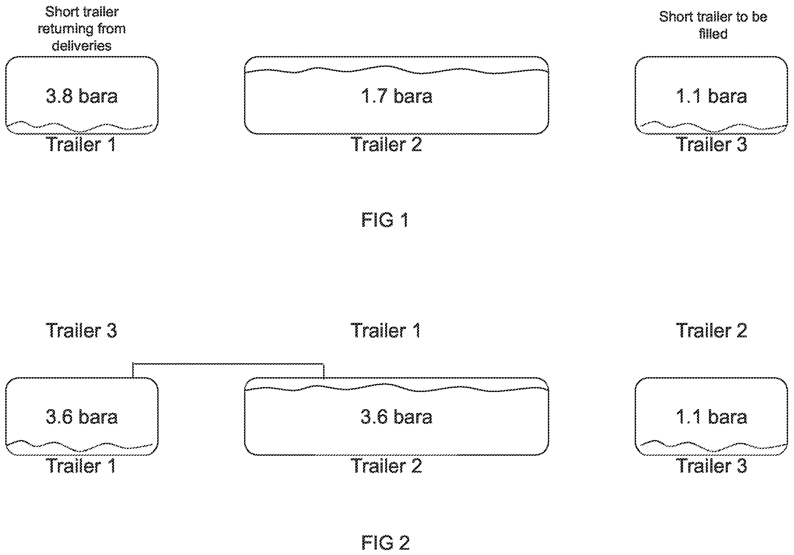

As shown in **FIG 1****,** after delivery of liquid cryogen to an end user site, called end user site A, and transport to a liquid cryogen depot, a liquid cryogen-containing tube trailer, called Trailer 1, contains a relatively lower amount of liquid cryogen and is at a relatively higher pressure, for example, 3.5 - 6 bara or about 3.8 bara. Also at the depot is another liquid cryogen-containing trailer, called Trailer 2. Trailer 2, commonly referred to in the field of liquefied gases as a so-called "jumbo trailer", has a liquid cryogen storage capacity higher than that of Trailer 1, which is commonly referred to as a "short trailer". For example, whereas the capacity of Trailer 1 typically ranges from ~36 m³, the capacity of Trailer 2 typically ranges from 75-80 m³. Also at the depot is another liquid cryogen-containing trailer, called Trailer 3. Each of Trailer 1, Trailer, 2, and Trailer 3 has a headspace filled with cryogen vapor above the liquid cryogen contained therein. At the depot, Trailer 1 is at an initial pressure higher than an initial pressure of Trailer 2 which is higher than an initial pressure of Trailer 3. Trailers 1 and 3 have substantially the same capacity. This means that Trailer 1 and Trailer 3 have been designed to contain a same amount of liquid cryogen, even though minor differences in their storage capacities may be present.

Trailer 2 typically travels between a liquefaction plant, where the cryogen is liquefied, and the depot and is used as the primary means of filling short trailers, including Trailer 1 and Trailer 3. As will be seen below, Trailer 3 is typically a trailer that has previously served the role that Trailer 1 serves in the following description of FIGS 1-7. Trailer 1 is at the depot because, after delivery of liquid cryogen to end user site A, Trailer 1 did not contain a sufficient amount of liquid cryogen for a practical amount of cryogen to be delivered to another end user site.

As seen in **FIG 2****,** after connecting a port formed in Trailer 1, adjacent the headspace thereof, with a port formed in Trailer 2, adjacent the headspace thereof, using a suitable pipe/conduit, the headspaces of the Trailer 1 and Trailer 2 are placed in flow communication through operation of one or more valves associated with the pipe/conduit connecting the ports of Trailer 1 and Trailer 2. This causes Trailers 1 and 2 to become pressure balanced, and of course, it will result in their having a common pressure in between the initial pressures in Trailer 1 and Trailer 2 prior to being pressure-balanced. For example, if Trailer 1 is at 3.8 bara and Trailer 2 is at 1.7 bara prior to their being pressure-balanced, the pressure within Trailer 1 may decrease from 3.8 bara to 3.6 bara while the pressure within Trailer 2 may increase from 1.7 bara to 3.6 bara. This common pressure is also greater than a pressure within Trailer 3.

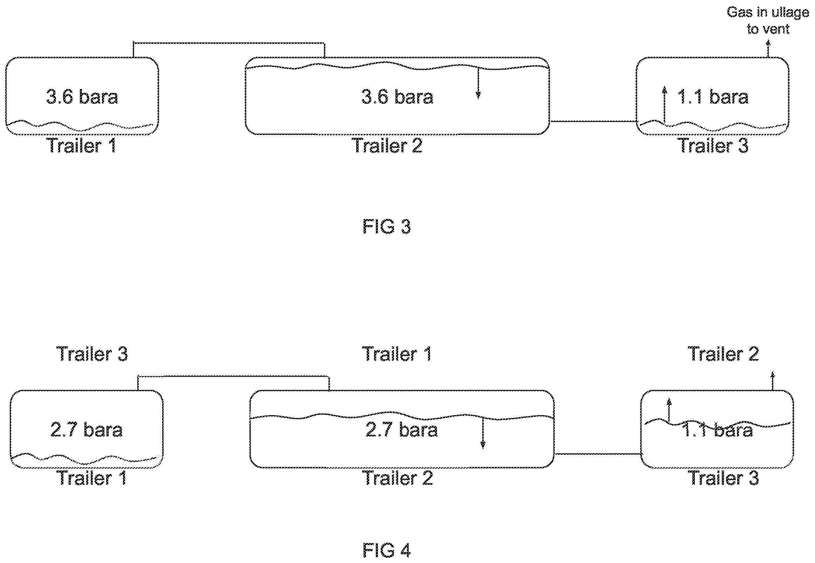

As seen in **FIG 3****,** a port formed in Trailer 2, adjacent a bottom thereof, is connected to a port formed in Trailer 3, adjacent a bottom thereof, using a suitable pipe/conduit, and Trailer 2, and Trailer 3 are placed in flow communication through operation of one or more valves associated with the pipe/conduit connecting the ports of Trailer 2 and Trailer 3. It should be noted that, at this time, the headspaces of Trailer 1 and Trailer 2 are in flow communication. This causes a flow of the liquid cryogen from Trailer 2 to Trailer 3, due to the pressure difference between, on one hand, the pressure within Trailer 1 and Trailer 2, and on the other hand, the pressure within Trailer 3. It should be noted that the gaseous cryogen within the headspace of Trailer 3 is allowed to vent, through operation of one or more valves associated with the headspace of Trailer 3, in order to maintain the pressure within Trailer 3 to remain, more or less, constant to allow the liquid cryogen to flow from Trailer 2 to Trailer 3 in a relatively unhindered manner and prevent a pressure increase in the Trailer 3. As the liquid cryogen flows from Trailer 2 into Trailer 3, there is space in Trailer 2 that needs to be filled with gaseous cryogen, and gaseous cryogen will continue to flow from Trailer 1 into Trailer 2.

As seen in **FIGS 4-5****,** this transfer of liquid cryogen from Trailer 2 to Trailer 3 is allowed to continue until the third trailer is substantially filled with liquid cryogen and Trailer 1 and Trailer 2 are each at a pressure P2. If the pressure difference between, on one hand, Trailer 1 and Trailer 2, and on the other hand, Trailer 3 is not sufficient to allow Trailer 3 to be filled with liquid cryogen to a desired level, a pressure building circuit associated with Trailer 1, a pressure building circuit associated with Trailer 2, or each of the aforementioned pressure building circuits may be operated so as to increase the pressure within Trailer 1 and Trailer 2 that is sufficient to force enough liquid cryogen into Trailer 3. Typically, the flow of liquid cryogen continues until each of Trailer 1, Trailer 2, and Trailer 3 become pressure-balanced. Alternatively, it could continue until the amount of liquid cryogen within Trailer 3 reaches a desired level, as confirmed by any suitable technique in the field of industrial gases, such as a level sensor, or a weight scale. For example, if the pressure within Trailer 1 and Trailer 2 is at 3.6 bara and the pressure within Trailer 3 is 1.1 bara prior to operation of the one or more valves associated with the pipe/conduit connecting Trailer 2 and Trailer 3, after substantially filling Trailer 3 with liquid cryogen from Trailer 2, the pressure within Trailer 1 and Trailer 2 decreases from 3.6 bara to 2.7 bara and the pressure within Trailer 3 remains at 1.1 bara.

After being substantially filled, the one or more valves associated with the pipe/conduit connecting Trailer 2 and Trailer 3 is operated to disallow flow communication between Trailer 2 and Trailer 3. Also, venting of gaseous cryogen from the headspace of Trailer 3 is prevented by operating the one or more valves associated with the headspace of Trailer 3. Next, the pipe/conduit connecting Trailer 2 and Trailer 3 is disconnected. Trailer 3 is now able to be transported to an end user site B at which liquid cryogen is transferred from Trailer 3 to a storage tank at end user site B which is the same or different from end user site A.

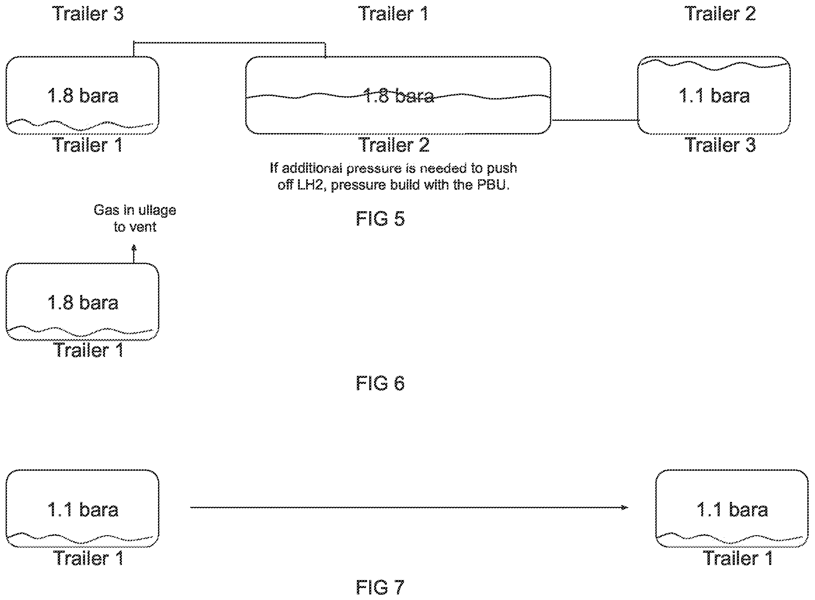

Optionally and as seen in **FIG 6****,** the pressure within the headspace of Trailer 1 may be vented to a suitable level so as to allow it to be more easily filled, by pressure difference, with liquid cryogen from Trailer 2 in the same manner as described above for the filling of Trailer 3. For example, if Trailer 1 is at 1.8 bara after filling Trailer 3 with liquid cryogen from Trailer 2, the gaseous cryogen within the headspace of Trailer 1 may be vented until the pressure within Trailer 1 reaches 1.1 bara. This lowered pressure allows Trailer 1 to be filled with liquid cryogen, due to the aforementioned pressure difference, without necessarily using a pressure building circuit or without using a pressure building circuit to such a greater extent as compared to filling without venting beforehand.

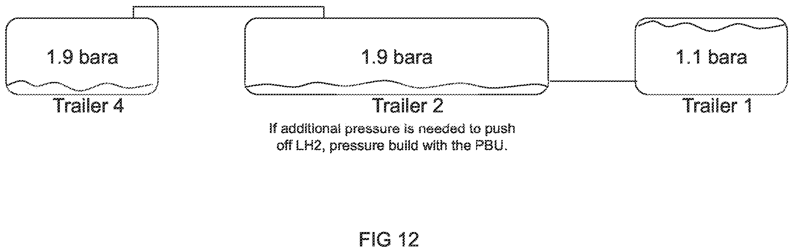

Optionally and as seen in FIGS **7-12****,** Trailer 1 assumes the role previously served by Trailer 3 and is substantially filled with liquid cryogen in a similar manner.

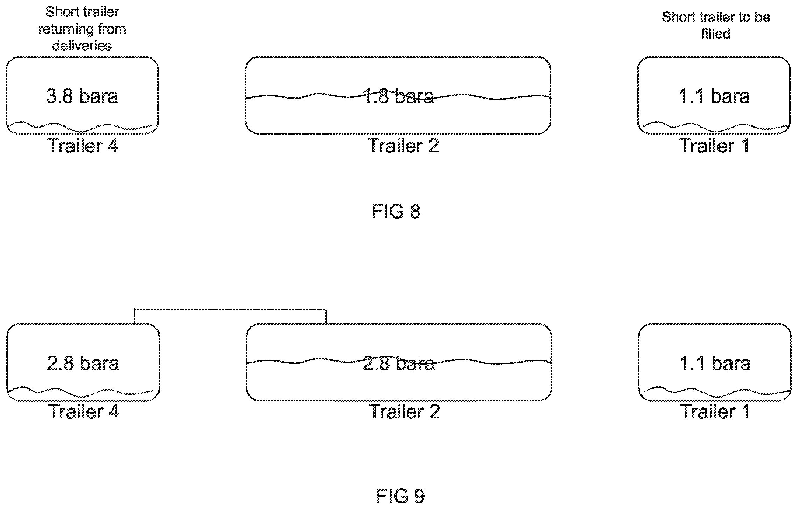

As seen in **FIG 8****,** after delivery of liquid cryogen to an end user site, called end user site C (which may be the same as or different from site A and the same as or different from site B) and transport to the liquid cryogen depot, a liquid cryogen-containing tube trailer, called Trailer 4, contains a relatively lower amount of liquid cryogen and is at a relatively higher pressure, for example, 3.5 - 6 bara or about 3.8 bara. Also at the depot are Trailer 2 and Trailer 1. As with Trailer 2 and Trailer 1, Trailer 4 has a headspace filled with cryogen vapor above the liquid cryogen contained therein. At the depot, Trailer 4 is at an initial pressure higher than an initial pressure of Trailer 2 which is higher than an initial pressure of Trailer 1. Trailers 4 and 1 have substantially the same capacity. This means that Trailer 4 and Trailer 1 have been designed to contain a same amount of liquid cryogen, even though minor differences in their storage capacities may be present.

As seen above, Trailer 1 has previously served the role that Trailer 4 serves in the following description of FIGS 8-12. Trailer 4 is at the depot because, after delivery of liquid cryogen to end user site C, Trailer 4 did not contain a sufficient amount of liquid cryogen for a practical amount of cryogen to be delivered to another end user site.

As seen in **FIG 9****,** after connecting a port formed in Trailer 4, adjacent the headspace thereof, with the port formed in Trailer 2, adjacent the headspace thereof, using a suitable pipe/conduit, the headspaces of the Trailer 4 and Trailer 2 are placed in flow communication through operation of one or more valves associated with the pipe/conduit connecting the ports of Trailer 4 and Trailer 2. This causes Trailers 4 and 2 to become pressure balanced, and of course, it will result in their having a common pressure in between the initial pressures in Trailer 4 and Trailer 2 prior to being pressure-balanced. For example, if Trailer 4 is at 3.8 bara and Trailer 2 is at 1.8 bara prior to their being pressure-balanced, the pressure within Trailer 4 may decrease from 3.8 bara to 2.8 bara while the pressure within Trailer 2 may increase from 1.8 bara to 2.8 bara. This common pressure is also greater than a pressure within Trailer 1.

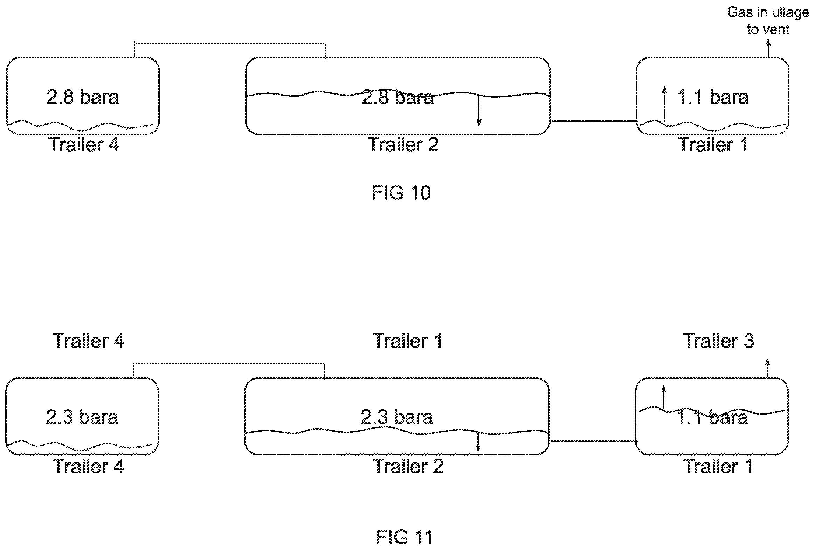

As seen in **FIG 10****,** the port formed in Trailer 2, adjacent a bottom thereof, is connected to a port formed in Trailer 1, adjacent a bottom thereof, using a suitable pipe/conduit and Trailer 2, and Trailer 1 are placed in flow communication through operation of one or more valves associated with the pipe/conduit connecting the ports of Trailer 2 and Trailer 1. It should be noted that, at this time, the headspaces of Trailer 4 and Trailer 2 are in flow communication. This causes a flow of the liquid cryogen from Trailer 2 to Trailer 1, due to the pressure difference between, on one hand, the pressure within Trailer 4 and Trailer 2, and on the other hand, the pressure within Trailer 1. It should be noted that the gaseous cryogen within the headspace of Trailer 1 is allowed to vent, through operation of one or more valves associated with the headspace of Trailer 1, to maintain the pressure within Trailer 1 to remain, more or less, constant to allow the liquid cryogen to flow from Trailer 2 to Trailer 1 in a relatively unhindered manner and prevent a pressure increase in the Trailer 1. As the liquid cryogen flows from Trailer 2 into Trailer 1, there is space in Trailer 2 that needs to be filled with gaseous cryogen, and gaseous cryogen will continue to flow from Trailer 4 into Trailer 2.

As seen in FIGS **11-12****,** this transfer of liquid cryogen from Trailer 2 to Trailer 1 is allowed to continue until the third trailer is substantially filled with liquid cryogen and Trailer 4 and Trailer 2 are each at a pressure P2. If the pressure difference between, on one hand, Trailer 4 and Trailer 2, and on the other hand, Trailer 1 is not sufficient to allow Trailer 1 to be filled with liquid cryogen to a desired level, a pressure building circuit associated with Trailer 4, a pressure building circuit associated with Trailer 2, or each of the aforementioned pressure building circuits may be operated so as to increase the pressure within Trailer 4 and Trailer 2 that is sufficient to force enough liquid cryogen into Trailer 1. Typically, the flow of liquid cryogen continues until each of Trailer 4, Trailer 2, and Trailer 1 become pressure-balanced. Alternatively, it could continue until the amount of liquid cryogen within Trailer 1 reaches a desired level, as confirmed by any suitable technique in the field of industrial gases, such as a level sensor, or a weight scale. For example, if the pressure within Trailer 4 and Trailer 2 is at 2.8 bara and the pressure within Trailer 1 is 1.1 bara prior to operation of the one or more valves associated with the pipe/conduit connecting Trailer 2 and Trailer 1, after substantially filling Trailer 1 with liquid cryogen from Trailer 2, the pressure within Trailer 4 and Trailer 2 decreases from 2.8 bara to 2.3 bara and the pressure within Trailer 1 remains at 1.1 bara.

After being substantially filled, the one or more valves associated with the pipe/conduit connecting Trailer 2 and Trailer 1 is operated to disallow flow communication between Trailer 2 and Trailer 1. Also, venting of gaseous cryogen from the headspace of Trailer 1 is prevented by operating the one or more valves associated with the headspace of Trailer 1. Next, the pipe/conduit connecting Trailer 2 and Trailer 1 is disconnected. Trailer 1 is now able to be transported to an end user site D at which liquid cryogen is transferred from Trailer 3 to a storage tank at end user site D which is the same or different from end user site A, end user site B, and end user site C.

Optionally, one of ordinary skill will recognize that the above-mentioned method may be repeated as necessary where the initially higher-pressure trailer is vented to a suitable level so as to allow it to be more easily filled, by pressure difference, with liquid cryogen from Trailer 2.

Embodiments of the invention provide many advantages.

In absence of the invention, the jumbo trailer needs to be pressurized in order to push liquid cryogen from the jumbo trailer to the short trailer. Skilled artisans will understand that, conventionally, this pressurization is created by vaporizing liquid cryogen in the jumbo trailer. In contrast, embodiments of the invention utilize gaseous cryogen from the short trailers for pressurization of the jumbo trailer. By avoiding vaporization of the liquid cryogen for pressurization, more cryogen (for example and in the case of cryogenic hydrogen, ~170 kg) is available to be transferred to the short trailers. Utilizing this liquid cryogen improves the efficiency of the supply chain and reduces losses because its heat content is lower in comparison to liquid cryogen filled into short trailers through conventional techniques. The supply chain efficiency is improved because the full amount of liquid cryogen is transferred at this step. Another way of looking at this is that the losses are reduced (using the aforementioned cryogenic hydrogen example, by ~170 kg). The gas in the short trailers will be vented, so capturing the gas to pressurize the jumbo trailer prevents the creation of an additional gas in the jumbo trailer that will have to be vented.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the scope of the appended claims. The present invention may suitably comprise, consist or consist essentially of the elements disclosed and may be practiced in the absence of an element not disclosed. Furthermore, if there is language referring to order, such as first and second, it should be understood in an exemplary sense and not in a limiting sense. For example, it can be recognized by those skilled in the art that certain steps can be combined into a single step.

The singular forms "a", "an" and "the" include plural referents, unless the context clearly dictates otherwise.

"Comprising" in a claim is an open transitional term which means the subsequently identified claim elements are a nonexclusive listing i.e. anything else may be additionally included and remain within the scope of "comprising." "Comprising" is defined herein as necessarily encompassing the more limited transitional terms "consisting essentially of' and "consisting of"; "comprising" may therefore be replaced by "consisting essentially of" or "consisting of" and remain within the expressly defined scope of "comprising".

"Providing" in a claim is defined to mean furnishing, supplying, making available, or preparing something. The step may be performed by any actor in the absence of express language in the claim to the contrary.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

## Claims

1. A method of distributing liquid cryogen to one or more end user sites, comprising the steps of:
providing first, second, and third liquid cryogen-containing trailers, wherein storage capacities of the first and third trailers are substantially the same and smaller than that of the second trailer, each of the trailers having a headspace filled with cryogen vapor above the liquid cryogen contained therein, each of the trailers being located at a depot; **characterized in that** at the depot the first trailer is at an initial pressure higher than an initial pressure of the second trailer which is higher than an initial pressure of the third trailer, the method further comprising the steps of:
placing headspaces of the first and second trailers in flow communication, thereby pressure-balancing the first and second trailers to a pressure P1 that is in between the initial pressures of the first and second trailers and that is higher than the initial pressure of the third trailer;
following said pressure-balancing of the first and second trailers, placing the liquid cryogen contained within the second trailer in flow communication with the liquid cryogen contained within the third trailer, thereby causing liquid cryogen to flow from the second trailer to the third trailer due to the pressure difference between the pressure P1 of the first and second trailers and the initial pressure of the third trailer and allowing said flow of liquid cryogen between the second and third trailers to continue until the third trailer is substantially filled with liquid cryogen and the first and second trailers are each at a pressure P2 .

2. The method of claim 1, further comprising the step of:
prior to said step of providing first, second, and third liquid cryogen-containing trailers, transporting the first trailer to an end user site A at which liquid cryogen is transferred from the first trailer to a storage tank at end user site A; and
following said transfer of liquid cryogen to the end user site A, transporting the first trailer to the depot at which are located the second and third trailers, wherein, at the depot, the first trailer is at an initial pressure higher than an initial pressure of the second trailer which is higher than an initial pressure of the third trailer.

3. The method of claim 2, further comprising the step of, after said step of allowing said flow of liquid cryogen between the second and third trailers to continue until the third trailer is substantially filled, transporting the third trailer to an end user site B at which liquid cryogen is transferred from the third trailer to a storage tank at end user site B which is the same or different from end user site A.

4. The method of claim 3, further comprising the steps of:
after said step of allowing said flow of liquid cryogen between the second and third trailers to continue until the third trailer is substantially filled, venting gaseous cryogen from the first trailer to a predetermined pressure lower than P2;
providing a fourth liquid cryogen-containing trailer having a storage capacity substantially the same as the first and third trailers, the fourth trailer being located at the depot at an initial pressure and having a headspace filled with cryogen vapor above the liquid cryogen contained therein, the initial pressure of the fourth trailer being higher than P2 which is higher than the predetermined pressure of the first trailer;
placing headspaces of the fourth and second trailers in flow communication, thereby pressure-balancing the fourth and second trailers to an intermediate pressure in between P2 and the initial pressure of the fourth trailer, the intermediate pressure of the fourth and second trailers being higher than the predetermined pressure of the first trailer; and
following said pressure-balancing of the fourth and second trailers, placing the liquid cryogen contained within the second trailer in flow communication with the liquid cryogen contained within the first trailer, thereby causing liquid cryogen to flow from the second trailer to the third trailer due to the pressure difference between the intermediate pressure of the first and second trailers and the predetermined pressure of the first trailer and allowing said flow of liquid cryogen between the second and first trailers to continue until the first trailer is substantially filled with liquid cryogen.

5. The method of claim 4, further comprising the step of transporting the first trailer to an end user site C at which liquid cryogen is transferred from the first trailer to a storage tank at end user site C, end user site C being the same or different than end user site A and the same or different than end user site B, wherein the second and fourth trailers are the same or different trailers.

6. The method of claim 2, further comprising the steps of:
after said step of allowing said flow of liquid cryogen between the second and third trailers to continue until the third trailer is substantially filled, venting gaseous cryogen from the first trailer to a predetermined pressure lower than P2;
providing a fourth liquid cryogen-containing trailer having a storage capacity substantially the same as the first and third trailers, the fourth trailer being located at the depot at an initial pressure and having a headspace filled with cryogen vapor above the liquid cryogen contained therein, the initial pressure of the fourth trailer being higher than P2 which is higher than the predetermined pressure of the first trailer;
placing headspaces of the fourth and second trailers in flow communication, thereby pressure-balancing the fourth and second trailers to an intermediate pressure in between P2 and the initial pressure of the fourth trailer, the intermediate pressure of the fourth and second trailers being higher than the predetermined pressure of the first trailer; and
following said pressure-balancing of the fourth and second trailers, placing the liquid cryogen contained within the second trailer in flow communication with the liquid cryogen contained within the first trailer, thereby causing liquid cryogen to flow from the second trailer to the third trailer due to the pressure difference between the intermediate pressure of the first and second trailers and the predetermined pressure of the first trailer and allowing said flow of liquid cryogen between the second and first trailers to continue until the first trailer is substantially filled with liquid cryogen.

7. The method of claim 6, further comprising the step of transporting the first trailer to an end user site C at which liquid cryogen is transferred from the first trailer to a storage tank at end user site C, end user site C being the same or different than end user site A and the same or different than end user site B, wherein the second and fourth trailers are the same or different trailers.

8. The method of claim 1, further comprising the steps of:
after said step of allowing said flow of liquid cryogen between the second and third trailers to continue until the third trailer is substantially filled, venting gaseous cryogen from the first trailer to a predetermined pressure lower than P2;
providing a fourth liquid cryogen-containing trailer having a storage capacity substantially the same as the first and third trailers, the fourth trailer being located at the depot at an initial pressure and having a headspace filled with cryogen vapor above the liquid cryogen contained therein, the initial pressure of the fourth trailer being higher than P2 which is higher than the predetermined pressure of the first trailer;
placing headspaces of the fourth and second trailers in flow communication, thereby pressure-balancing the fourth and second trailers to an intermediate pressure in between P2 and the initial pressure of the fourth trailer, the intermediate pressure of the fourth and second trailers being higher than the predetermined pressure of the first trailer; and
following said pressure-balancing of the fourth and second trailers, placing the =liquid cryogen contained within the second trailer in flow communication with the liquid cryogen contained within the first trailer, thereby causing liquid cryogen to flow from the second trailer to the third trailer due to the pressure difference between the intermediate pressure of the first and second trailers and the predetermined pressure of the first trailer and allowing said flow of liquid cryogen between the second and first trailers to continue until the first trailer is substantially filled with liquid cryogen.

9. The method of claim 8, further comprising the step of transporting the first trailer to an end user site C at which liquid cryogen is transferred from the first trailer to a storage tank at end user site C, end user site C being the same or different than end user site A and the same or different than end user site B, wherein the second and fourth trailers are the same or different trailers.

10. The method of claim 9, further comprising the step of, after said step of allowing said flow of liquid cryogen between the second and third trailers to continue until the third trailer is substantially filled, transporting the third trailer to an end user site B at which liquid cryogen is transferred from the first trailer to a storage tank at end user site B which is the same or different from end user site A.

11. The method of claim 1, wherein the cryogen is Hydrogen.

## Patentansprüche

1. Verfahren zum Verteilen von flüssigem Kryogen an einen oder mehrere Endverbraucherstandorte, umfassend die folgenden Schritte: Bereitstellen eines ersten, zweiten und dritten flüssiges Kryogen enthaltenden Anhängers, wobei die Speicherkapazitäten des ersten und dritten Anhängers im Wesentlichen gleich und kleiner als die des zweiten Anhängers sind, jeder der Anhänger einen Kopfraum aufweist, der mit Kryogendampf über dem darin enthaltenen flüssigen Kryogen gefüllt ist, und jeder der Anhänger sich in einem Depot befindet; **dadurch gekennzeichnet, dass** sich im Depot der erste Anhänger auf einem Anfangsdruck befindet, der höher ist als ein Anfangsdruck des zweiten Anhängers, der höher ist als ein Anfangsdruck des dritten Anhängers, wobei das Verfahren ferner die folgenden Schritte umfasst: Herstellen einer strömungstechnischen Verbindung zwischen den Kopfräumen des ersten und zweiten Anhängers, wodurch ein Druckausgleich zwischen dem ersten und zweiten Anhänger auf einen Druck P1 erfolgt, der zwischen den Anfangsdrücken des ersten und zweiten Anhängers liegt und höher ist als der Anfangsdruck des dritten Anhängers; nach dem besagten Druckausgleich des ersten und zweiten Anhängers, Herstellen einer strömungstechnischen Verbindung zwischen dem im zweiten Anhänger enthaltenen flüssigen Kryogen und dem im dritten Anhänger enthaltenen flüssigen Kryogen, wodurch bewirkt wird, dass flüssiges Kryogen aufgrund der Druckdifferenz zwischen dem Druck P1 des ersten und zweiten Anhängers und dem Anfangsdruck des dritten Anhängers vom zweiten Anhänger zum dritten Anhänger strömt, und Ermöglichen, dass der besagte Fluss von flüssigem Kryogen zwischen dem zweiten und dritten Anhänger fortgesetzt wird, bis der dritte Anhänger im Wesentlichen mit flüssigem Kryogen gefüllt ist und der erste und zweite Anhänger jeweils auf einem Druck P2 sind.

2. Verfahren nach Anspruch 1, ferner umfassend den folgenden Schritt: vor dem besagten Schritt des Bereitstellens des ersten, zweiten und dritten flüssiges Kryogen enthaltenden Anhängers, Transportieren des ersten Anhängers zu einem Endverbraucherstandort A, an dem flüssiges Kryogen vom ersten Anhänger in einen Lagertank am Endverbraucherstandort A überführt wird; und nach der besagten Überführung von flüssigem Kryogen zum Endverbraucherstandort A, Transportieren des ersten Anhängers zu dem Depot, an dem sich der zweite und dritte Anhänger befinden, wobei sich im Depot der erste Anhänger auf einem Anfangsdruck befindet, der höher ist als ein Anfangsdruck des zweiten Anhängers, der höher ist als ein Anfangsdruck des dritten Anhängers.

3. Verfahren nach Anspruch 2, ferner umfassend den Schritt, nach dem Ermöglichen, dass der besagte Fluss von flüssigem Kryogen zwischen dem zweiten und dritten Anhänger fortgesetzt wird, bis der dritte Anhänger im Wesentlichen gefüllt ist, den dritten Anhänger zu einem Endverbraucherstandort B zu transportieren, an dem flüssiges Kryogen vom dritten Anhänger in einen Lagertank am Endverbraucherstandort B überführt wird, der derselbe oder ein anderer als der Endverbraucherstandort A ist.

4. Verfahren nach Anspruch 3, ferner umfassend die folgenden Schritte: nach dem Ermöglichen, dass der besagte Fluss von flüssigem Kryogen zwischen dem zweiten und dritten Anhänger fortgesetzt wird, bis der dritte Anhänger im Wesentlichen gefüllt ist, Ablassen von gasförmigem Kryogen aus dem ersten Anhänger auf einen vorbestimmten Druck, der niedriger als P2 ist; Bereitstellen eines vierten flüssiges Kryogen enthaltenden Anhängers mit einer Speicherkapazität, die im Wesentlichen dieselbe ist wie die des ersten und dritten Anhängers, wobei sich der vierte Anhänger im Depot auf einem Anfangsdruck befindet und einen Kopfraum aufweist, der mit Kryogendampf über dem darin enthaltenen flüssigen Kryogen gefüllt ist, wobei der Anfangsdruck des vierten Anhängers höher als P2 ist, der höher als der vorbestimmte Druck des ersten Anhängers ist; Herstellen einer strömungstechnischen Verbindung zwischen den Kopfräumen des vierten und zweiten Anhängers, wodurch ein Druckausgleich zwischen dem vierten und zweiten Anhänger auf einen Zwischendruck zwischen P2 und dem Anfangsdruck des vierten Anhängers erfolgt, wobei der Zwischendruck des vierten und zweiten Anhängers höher ist als der vorbestimmte Druck des ersten Anhängers; und nach dem besagten Druckausgleich des vierten und zweiten Anhängers, Herstellen einer strömungstechnischen Verbindung zwischen dem im zweiten Anhänger enthaltenen flüssigen Kryogen und dem im ersten Anhänger enthaltenen flüssigen Kryogen, wodurch bewirkt wird, dass flüssiges Kryogen aufgrund der Druckdifferenz zwischen dem Zwischendruck des ersten und zweiten Anhängers und dem vorbestimmten Druck des ersten Anhängers vom zweiten Anhänger zum dritten Anhänger strömt, und Ermöglichen, dass der besagte Fluss von flüssigem Kryogen zwischen dem zweiten und ersten Anhänger fortgesetzt wird, bis der erste Anhänger im Wesentlichen mit flüssigem Kryogen gefüllt ist.

5. Verfahren nach Anspruch 4, ferner umfassend den Schritt des Transportierens des ersten Anhängers zu einem Endverbraucherstandort C, an dem flüssiges Kryogen vom ersten Anhänger in einen Lagertank am Endverbraucherstandort C überführt wird, wobei der Endverbraucherstandort C derselbe oder ein anderer als der Endverbraucherstandort A und derselbe oder ein anderer als der Endverbraucherstandort B ist, wobei der zweite und vierte Anhänger dieselben oder unterschiedliche Anhänger sind.

6. Verfahren nach Anspruch 2, ferner umfassend die folgenden Schritte: nach dem Ermöglichen, dass der besagte Fluss von flüssigem Kryogen zwischen dem zweiten und dritten Anhänger fortgesetzt wird, bis der dritte Anhänger im Wesentlichen gefüllt ist, Ablassen von gasförmigem Kryogen aus dem ersten Anhänger auf einen vorbestimmten Druck, der niedriger als P2 ist; Bereitstellen eines vierten flüssiges Kryogen enthaltenden Anhängers mit einer Speicherkapazität, die im Wesentlichen dieselbe ist wie die des ersten und dritten Anhängers, wobei sich der vierte Anhänger im Depot auf einem Anfangsdruck befindet und einen Kopfraum aufweist, der mit Kryogendampf über dem darin enthaltenen flüssigen Kryogen gefüllt ist, wobei der Anfangsdruck des vierten Anhängers höher als P2 ist, der höher als der vorbestimmte Druck des ersten Anhängers ist; Herstellen einer strömungstechnischen Verbindung zwischen den Kopfräumen des vierten und zweiten Anhängers, wodurch ein Druckausgleich zwischen dem vierten und zweiten Anhänger auf einen Zwischendruck zwischen P2 und dem Anfangsdruck des vierten Anhängers erfolgt, wobei der Zwischendruck des vierten und zweiten Anhängers höher ist als der vorbestimmte Druck des ersten Anhängers; und nach dem besagten Druckausgleich des vierten und zweiten Anhängers, Herstellen einer strömungstechnischen Verbindung zwischen dem im zweiten Anhänger enthaltenen flüssigen Kryogen und dem im ersten Anhänger enthaltenen flüssigen Kryogen, wodurch bewirkt wird, dass flüssiges Kryogen aufgrund der Druckdifferenz zwischen dem Zwischendruck des ersten und zweiten Anhängers und dem vorbestimmten Druck des ersten Anhängers vom zweiten Anhänger zum dritten Anhänger strömt, und Ermöglichen, dass der besagte Fluss von flüssigem Kryogen zwischen dem zweiten und ersten Anhänger fortgesetzt wird, bis der erste Anhänger im Wesentlichen mit flüssigem Kryogen gefüllt ist.

7. Verfahren nach Anspruch 6, ferner umfassend den Schritt des Transportierens des ersten Anhängers zu einem Endverbraucherstandort C, an dem flüssiges Kryogen vom ersten Anhänger in einen Lagertank am Endverbraucherstandort C überführt wird, wobei der Endverbraucherstandort C derselbe oder ein anderer als der Endverbraucherstandort A und derselbe oder ein anderer als der Endverbraucherstandort B ist, wobei der zweite und vierte Anhänger dieselben oder unterschiedliche Anhänger sind.

8. Verfahren nach Anspruch 1, ferner umfassend die folgenden Schritte: nach dem Ermöglichen, dass der besagte Fluss von flüssigem Kryogen zwischen dem zweiten und dritten Anhänger fortgesetzt wird, bis der dritte Anhänger im Wesentlichen gefüllt ist, Ablassen von gasförmigem Kryogen aus dem ersten Anhänger auf einen vorbestimmten Druck, der niedriger als P2 ist; Bereitstellen eines vierten flüssiges Kryogen enthaltenden Anhängers mit einer Speicherkapazität, die im Wesentlichen dieselbe ist wie die des ersten und dritten Anhängers, wobei sich der vierte Anhänger im Depot auf einem Anfangsdruck befindet und einen Kopfraum aufweist, der mit Kryogendampf über dem darin enthaltenen flüssigen Kryogen gefüllt ist, wobei der Anfangsdruck des vierten Anhängers höher als P2 ist, der höher als der vorbestimmte Druck des ersten Anhängers ist; Herstellen einer strömungstechnischen Verbindung zwischen den Kopfräumen des vierten und zweiten Anhängers, wodurch ein Druckausgleich zwischen dem vierten und zweiten Anhänger auf einen Zwischendruck zwischen P2 und dem Anfangsdruck des vierten Anhängers erfolgt, wobei der Zwischendruck des vierten und zweiten Anhängers höher ist als der vorbestimmte Druck des ersten Anhängers; und nach dem besagten Druckausgleich des vierten und zweiten Anhängers, Herstellen einer strömungstechnischen Verbindung zwischen dem im zweiten Anhänger enthaltenen =flüssigen Kryogen und dem im ersten Anhänger enthaltenen flüssigen Kryogen, wodurch bewirkt wird, dass flüssiges Kryogen aufgrund der Druckdifferenz zwischen dem Zwischendruck des ersten und zweiten Anhängers und dem vorbestimmten Druck des ersten Anhängers vom zweiten Anhänger zum dritten Anhänger strömt, und Ermöglichen, dass der besagte Fluss von flüssigem Kryogen zwischen dem zweiten und ersten Anhänger fortgesetzt wird, bis der erste Anhänger im Wesentlichen mit flüssigem Kryogen gefüllt ist.

9. Verfahren nach Anspruch 8, ferner umfassend den Schritt des Transportierens des ersten Anhängers zu einem Endverbraucherstandort C, an dem flüssiges Kryogen vom ersten Anhänger in einen Lagertank am Endverbraucherstandort C überführt wird, wobei der Endverbraucherstandort C derselbe oder ein anderer als der Endverbraucherstandort A und derselbe oder ein anderer als der Endverbraucherstandort B ist, wobei der zweite und vierte Anhänger dieselben oder unterschiedliche Anhänger sind.

10. Verfahren nach Anspruch 9, ferner umfassend den Schritt, nach dem Ermöglichen, dass der besagte Fluss von flüssigem Kryogen zwischen dem zweiten und dritten Anhänger fortgesetzt wird, bis der dritte Anhänger im Wesentlichen gefüllt ist, den dritten Anhänger zu einem Endverbraucherstandort B zu transportieren, an dem flüssiges Kryogen vom ersten Anhänger in einen Lagertank am Endverbraucherstandort B überführt wird, der derselbe oder ein anderer als der Endverbraucherstandort A ist.

11. Verfahren nach Anspruch 1, wobei das Kryogen Wasserstoff ist.

## Revendications

1. Procédé de distribution de cryogène liquide à un ou plusieurs sites d'utilisateur final, comprenant les étapes consistant à : fournir des première, deuxième et troisième remorques contenant du cryogène liquide, dans lequel les capacités de stockage des première et troisième remorques sont sensiblement les mêmes et plus petites que celle de la deuxième remorque, chacune des remorques ayant un espace de tête rempli de vapeur de cryogène au-dessus du cryogène liquide y étant contenu, chacune des remorques étant située à un dépôt ; **caractérisé en ce que**, au dépôt, la première remorque est à une pression initiale supérieure à une pression initiale de la deuxième remorque qui est supérieure à une pression initiale de la troisième remorque, le procédé comprenant en outre les étapes consistant à : placer les espaces de tête des première et deuxième remorques en communication fluidique, équilibrant ainsi par la pression les première et deuxième remorques à une pression P1 qui est intermédiaire entre les pressions initiales des première et deuxième remorques et qui est supérieure à la pression initiale de la troisième remorque ; suite audit équilibrage de pression des première et deuxième remorques, placer le cryogène liquide contenu dans la deuxième remorque en communication fluidique avec le cryogène liquide contenu dans la troisième remorque, amenant ainsi le cryogène liquide à s'écouler de la deuxième remorque vers la troisième remorque en raison de la différence de pression entre la pression P1 des première et deuxième remorques et la pression initiale de la troisième remorque, et permettre audit écoulement de cryogène liquide entre les deuxième et troisième remorques de se poursuivre jusqu'à ce que la troisième remorque soit sensiblement remplie de cryogène liquide et que les première et deuxième remorques soient chacune à une pression P2.

2. Procédé selon la revendication 1, comprenant en outre l'étape consistant à : avant ladite étape de fourniture des première, deuxième et troisième remorques contenant du cryogène liquide, transporter la première remorque jusqu'à un site d'utilisateur final A auquel du cryogène liquide est transféré de la première remorque à un réservoir de stockage au site d'utilisateur final A ; et suite audit transfert de cryogène liquide au site d'utilisateur final A, transporter la première remorque jusqu'au dépôt auquel sont situées les deuxième et troisième remorques, dans lequel, au dépôt, la première remorque est à une pression initiale supérieure à une pression initiale de la deuxième remorque qui est supérieure à une pression initiale de la troisième remorque.

3. Procédé selon la revendication 2, comprenant en outre l'étape consistant à, après ladite étape consistant à permettre audit écoulement de cryogène liquide entre les deuxième et troisième remorques de se poursuivre jusqu'à ce que la troisième remorque soit sensiblement remplie, transporter la troisième remorque jusqu'à un site d'utilisateur final B auquel du cryogène liquide est transféré de la troisième remorque à un réservoir de stockage au site d'utilisateur final B qui est le même que le site d'utilisateur final A ou différent de celui-ci.

4. Procédé selon la revendication 3, comprenant en outre les étapes consistant à : après ladite étape consistant à permettre audit écoulement de cryogène liquide entre les deuxième et troisième remorques de se poursuivre jusqu'à ce que la troisième remorque soit sensiblement remplie, purger du cryogène gazeux de la première remorque jusqu'à une pression prédéterminée inférieure à P2 ; fournir une quatrième remorque contenant du cryogène liquide ayant une capacité de stockage sensiblement la même que les première et troisième remorques, la quatrième remorque étant située au dépôt à une pression initiale et ayant un espace de tête rempli de vapeur de cryogène au-dessus du cryogène liquide y étant contenu, la pression initiale de la quatrième remorque étant supérieure à P2 qui est supérieure à la pression prédéterminée de la première remorque ; placer les espaces de tête des quatrième et deuxième remorques en communication fluidique, équilibrant ainsi par la pression les quatrième et deuxième remorques à une pression intermédiaire entre P2 et la pression initiale de la quatrième remorque, la pression intermédiaire des quatrième et deuxième remorques étant supérieure à la pression prédéterminée de la première remorque ; et suite audit équilibrage de pression des quatrième et deuxième remorques, placer le cryogène liquide contenu dans la deuxième remorque en communication fluidique avec le cryogène liquide contenu dans la première remorque, amenant ainsi le cryogène liquide à s'écouler de la deuxième remorque vers la troisième remorque en raison de la différence de pression entre la pression intermédiaire des première et deuxième remorques et la pression prédéterminée de la première remorque et permettre audit écoulement de cryogène liquide entre les deuxième et première remorques de se poursuivre jusqu'à ce que la première remorque soit sensiblement remplie de cryogène liquide.

5. Procédé selon la revendication 4, comprenant en outre l'étape consistant à transporter la première remorque jusqu'à un site d'utilisateur final C auquel du cryogène liquide est transféré de la première remorque à un réservoir de stockage au site d'utilisateur final C, le site d'utilisateur final C étant le même que le site d'utilisateur final A ou différent de celui-ci et le même que le site d'utilisateur final B ou différent de celui-ci, dans lequel les deuxième et quatrième remorques sont les mêmes remorques ou des remorques différentes.

6. Procédé selon la revendication 2, comprenant en outre les étapes consistant à : après ladite étape consistant à permettre audit écoulement de cryogène liquide entre les deuxième et troisième remorques de se poursuivre jusqu'à ce que la troisième remorque soit sensiblement remplie, purger du cryogène gazeux de la première remorque jusqu'à une pression prédéterminée inférieure à P2 ; fournir une quatrième remorque contenant du cryogène liquide ayant une capacité de stockage sensiblement la même que les première et troisième remorques, la quatrième remorque étant située au dépôt à une pression initiale et ayant un espace de tête rempli de vapeur de cryogène au-dessus du cryogène liquide y étant contenu, la pression initiale de la quatrième remorque étant supérieure à P2 qui est supérieure à la pression prédéterminée de la première remorque ; placer les espaces de tête des quatrième et deuxième remorques en communication fluidique, équilibrant ainsi par la pression les quatrième et deuxième remorques à une pression intermédiaire entre P2 et la pression initiale de la quatrième remorque, la pression intermédiaire des quatrième et deuxième remorques étant supérieure à la pression prédéterminée de la première remorque ; et suite audit équilibrage de pression des quatrième et deuxième remorques, placer le cryogène liquide contenu dans la deuxième remorque en communication fluidique avec le cryogène liquide contenu dans la première remorque, amenant ainsi le cryogène liquide à s'écouler de la deuxième remorque vers la troisième remorque en raison de la différence de pression entre la pression intermédiaire des première et deuxième remorques et la pression prédéterminée de la première remorque et permettre audit écoulement de cryogène liquide entre les deuxième et première remorques de se poursuivre jusqu'à ce que la première remorque soit sensiblement remplie de cryogène liquide.

7. Procédé selon la revendication 6, comprenant en outre l'étape consistant à transporter la première remorque jusqu'à un site d'utilisateur final C auquel du cryogène liquide est transféré de la première remorque à un réservoir de stockage au site d'utilisateur final C, le site d'utilisateur final C étant le même que le site d'utilisateur final A ou différent de celui-ci et le même que le site d'utilisateur final B ou différent de celui-ci, dans lequel les deuxième et quatrième remorques sont les mêmes remorques ou des remorques différentes.

8. Procédé selon la revendication 1, comprenant en outre les étapes consistant à : après ladite étape consistant à permettre audit écoulement de cryogène liquide entre les deuxième et troisième remorques de se poursuivre jusqu'à ce que la troisième remorque soit sensiblement remplie, purger du cryogène gazeux de la première remorque jusqu'à une pression prédéterminée inférieure à P2 ; fournir une quatrième remorque contenant du cryogène liquide ayant une capacité de stockage sensiblement la même que les première et troisième remorques, la quatrième remorque étant située au dépôt à une pression initiale et ayant un espace de tête rempli de vapeur de cryogène au-dessus du cryogène liquide y étant contenu, la pression initiale de la quatrième remorque étant supérieure à P2 qui est supérieure à la pression prédéterminée de la première remorque ; placer les espaces de tête des quatrième et deuxième remorques en communication fluidique, équilibrant ainsi par la pression les quatrième et deuxième remorques à une pression intermédiaire entre P2 et la pression initiale de la quatrième remorque, la pression intermédiaire des quatrième et deuxième remorques étant supérieure à la pression prédéterminée de la première remorque ; et suite audit équilibrage de pression des quatrième et deuxième remorques, placer le cryogène =liquide contenu dans la deuxième remorque en communication fluidique avec le cryogène liquide contenu dans la première remorque, amenant ainsi le cryogène liquide à s'écouler de la deuxième remorque vers la troisième remorque en raison de la différence de pression entre la pression intermédiaire des première et deuxième remorques et la pression prédéterminée de la première remorque et permettre audit écoulement de cryogène liquide entre les deuxième et première remorques de se poursuivre jusqu'à ce que la première remorque soit sensiblement remplie de cryogène liquide.

9. Procédé selon la revendication 8, comprenant en outre l'étape consistant à transporter la première remorque jusqu'à un site d'utilisateur final C auquel du cryogène liquide est transféré de la première remorque à un réservoir de stockage au site d'utilisateur final C, le site d'utilisateur final C étant le même que le site d'utilisateur final A ou différent de celui-ci et le même que le site d'utilisateur final B ou différent de celui-ci, dans lequel les deuxième et quatrième remorques sont les mêmes remorques ou des remorques différentes.

10. Procédé selon la revendication 9, comprenant en outre l'étape consistant à, après ladite étape consistant à permettre audit écoulement de cryogène liquide entre les deuxième et troisième remorques de se poursuivre jusqu'à ce que la troisième remorque soit sensiblement remplie, transporter la troisième remorque jusqu'à un site d'utilisateur final B auquel du cryogène liquide est transféré de la première remorque à un réservoir de stockage au site d'utilisateur final B qui est le même que le site d'utilisateur final A ou différent de celui-ci.

11. Procédé selon la revendication 1, dans lequel le cryogène est de l'Hydrogène.
